# EUROPÄISCHE PATENTSCHRIFT

(11) **EP 1 365 512 B1**
(45) Veröffentlichungstag und Bekanntmachung des Hinweises auf die Patenterteilung: **19.03.2008**
(21) Anmeldenummer: 03011656.0
(22) Anmeldetag: 22.05.2003
(51) Int. Cl.: H03K 19/0175

(54) **Schaltungsanordnung zum Abschluss von Busleitungen eines Bussystems**
Apparatus for terminating bus lines of a bus system
Dispositif de terminaison des lignes de bus d'un système de bus

(30) Priorität: 22.05.2002 DE 10222676
(43) Veröffentlichungstag der Anmeldung: 26.11.2003
(73) Patentinhaber: SIEMENS AKTIENGESELLSCHAFT, 80333 München (DE)
(72) Erfinder: Reichl, Wolfgang, 76467 Bietigheim (DE)

(56) Entgegenhaltungen:
- DE-A1- 4 305 822
- DE-A1- 4 445 846
- US-A- 5 781 028

## Beschreibung

Die Erfindung betrifft eine Schaltungsanordnung zum Abschluss von Busleitungen eines Bussystems, insbesondere eines Profibussystems, nach der Gattung des Hauptanspruchs.

Es ist allgemein bekannt, dass in einem Profibus-System in der Automatisierungstechnik die erste und die letzte Teilnehmerstation am Bus mit einem Abschlusswiderstand versehen wird, der in etwa dem Wellenwiderstand der Signalübertragungsleitung entspricht. Beispielsweise ist aus der Produktbeschreibung "Siemens SINEC L2-Busanschlussstecker mit PG-Buchse in Schutzart IP20", Nr.6ES5762-1AA21 aus 1994, zu entnehmen, dass solche Abschlusswiderstände im Busanschlussstecker manuell zuschaltbar sind.

Die bekannte manuelle Zuschaltung kann jedoch zu Fehlern führen, wobei die Zu- und Abschaltung der Abschlusswiderstände darüber hinaus nur durch ein Aufschrauben des Steckergehäuses bedient werden kann. Außerdem ist sicherzustellen, dass die Abschlusswiderstände nur dann eingeschaltet sind, wenn der Profibus-Teilnehmer am Anfang oder Ende des Busses gesteckt ist; bei allen anderen Teilnehmern am Busverkehr ist der Abschlusswiderstand ausgeschaltet.

Für sich gesehen ist aus der DE 44 45 846 A1 bekannt, dass ein Abschlusswiderstand bei einer hochfrequenten Signalübertragungsleitung auch über die Source-Drain-Strecke eines Feldeffekttransistors realisiert werden kann. Der Widerstand der Source-Drain-Strecke wird hier durch eine geregelte Steuerspannung am Gate des Feldeffekttransistors eingestellt, um einen für eine optimale Leitungsanpassung erforderlichen Widerstandswert zu erreichen.

Durch US 5,781,028 ist eine Schaltungsanordnung zum Abschluss von Busleitungen eines Bussystems bekannt, mit an die Busleitungen zu- und abschaltbaren Abschlusswiderständen für die jeweils erste und letzte Teilnehmerstation am Bussystem, wobei eine codierbare Ansteuerschaltung in den jeweiligen Busanschlüssen des Bussystems vorhanden ist, mit der Transistoren als ohmsche Schalter zur Bildung der Abschlusswiderstände zwischen und an die Busleitungen schaltbar sind.

Der Erfindung liegt die Aufgabe zugrunde, eine einfache und sichere Schaltungsanordnung zum Abschluss von Busleitungen mit einem ohmschen Abschlusswiderstand im Bussystem zu schaffen.

Gemäß der Erfindung ist eine Schaltungsanordnung zum Abschluss von Busleitungen mit an die Busleitungen zu- und abschaltbaren Abschlusswiderständen in vorteilhafter Weise dadurch weitergebildet, dass für die jeweils erste und letzte Teilnehmerstation am Bussystem eine Ansteuerschaltung in den jeweiligen Busanschlüssen des Bussystems vorhanden ist, mit der Feldeffekttransistoren als ohmsche Schalter zur Bildung der Abschlusswiderstände zwischen und an die Busleitungen schaltbar sind.

Bei einer bevorzugten Anwendung ist das Bussystem ein Profibus, wie er häufig in der Automatisierungstechnik angeordnet wird. Hierbei wird gemäß der Erfindung ein erster ohmscher Schalter zwischen der einen Busleitung und der Versorgungsspannung, ein zweiter ohmscher Schalter zwischen die zwei Busleitungen des Profibusses und ein dritter ohmscher Schalter zwischen der anderen Busleitung und Masse schaltbar angeordnet. Diese Abschlusswiderstände wurden bisher beispielsweise über einen zweipoligen Schalter zu- oder abgeschaltet, den der Service-Techniker manuell bediente.

Diesen manuellen Schaltvorgang ersetzen erfindungsgemäß die ohmschen Schalter; diese werden dabei durch die jeweiligen Source-Drain-Strecken der Feldeffekttransistoren und gegebenenfalls durch jeweils einen in Reihe geschalteten Zusatzwiderstand gebildet, wobei die Feldeffekttransistoren als steuerbare Widerstände entweder einen Zustand mit einem ohmschen Widerstand (Ein) oder den gesperrten Zustand (Aus) haben.

Die Erkennung der Position des gesteckten oder sonstwie angeschlossenen Profibus-Teilnehmers am Bus, d. h. entweder die Position am Anfang bzw. am Ende oder die Position mittendrin, geschieht über die Auswertung eines Widerstandswertes eines Codewiderstandes, woraus eine nachfolgende Transistorschaltung ein digitales Signal erzeugt. Im Verlauf des Bussystems wird dabei bei einer Anschaltung von zum Teilnehmer hin und vom Teilnehmer wegführenden Busanschlüssen durch eine Parallelschaltung der zwei Codewiderstände der Widerstandswert vermindert und am Anfang und am Ende der Busleitung durch Anschaltung des Teilnehmers über nur einen Busanschluss der volle Widerstandswert des Codewiderstandes ausgewertet.

Eine Möglichkeit der schaltungstechnischen Realisierung besteht darin, dass zum Anschluss des Codewiderstandes an die Digitalisierungsschaltung bei einem mit Steckkontakten versehenen Busanschluss des Codewiderstandes von einem freien Pin des Steckers nach Masse geführt ist. Bei einem Anschluss des Codewiderstandes an die Digitalisierungsschaltung über einen mit einem Kabelanschluss herstellbaren Busanschluss wird über den Schirm des Kabels eine geteilte Kabelauflage im Busanschluss derart überbrückt, dass der Codewiderstand nach Masse geführt ist. Weitere vorteilhafte Weiterbildungen der Erfindung sind in den Unteransprüchen angegeben.

Die Erfindung wird anhand des in der Zeichnung dargestellten Ausführungsbeispiels erläutert. Es zeigen:
- Figur 1: eine Prinzipansicht eines Profibussystems mit Teilnehmern mitten im Bussystem und am Anfang und am Ende mit Abschlusswiderständen,
- Figur 2: Detailansichten eines Busanschlusses für einen Teilnehmer über eine Steckverbindung und mit zuschaltbaren Abschlusswiderständen,
- Figur 3: ein prinzipielles Blockschaltbild der zuschaltbaren Abschlusswiderstände als ohmsche Schalter,
- Figur 4: eine konstruktive Möglichkeit eines Busanschlusses über eine schraubbare Kabelverbindung mit einem Codierwiderstand,
- Figuren 5 und 6: Schaltungsbeispiele für die Beschaltung von Feldeffekttransistoren als ohmsche Schalter an jeweils einer von zwei Busleitungen,
- Figuren 7 und 8: Schaltungsbeispiele für die Beschaltung von Feldeffekttransistoren jeweils als gerichteter ohmscher Schalter zwischen den beiden Busleitungen und
- Figur 9: ein Schaltungsbeispiel für die Ansteuerung eines Feldeffekttransistors nach der Figur 8.

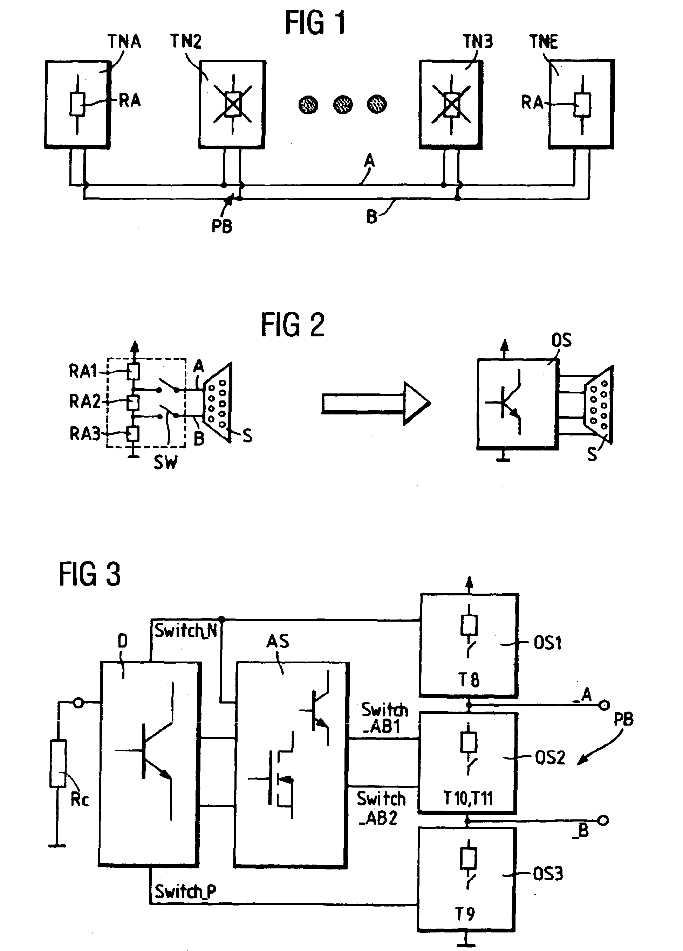

In Figur 1 ist eine Prinzipansicht eines Profibussystems PB mit Busleitungen A und B und mit hier nur beispielhaft angegebenen Teilnehmerstationen TN2 und TN3 mitten im Bussystem und mit einem Teilnehmer TNA am Anfang und mit einem Teilnehmer TNE am Ende des Profibussystems PB. Die Teilnehmer TNA und TNE sind mit hier symbolisch angedeuteten Abschlusswiderständen RA versehen worden und die Teilnehmer TN2 und TN3 haben diese Abschlusswiderstände RA deaktiviert, falls in ihren Steckverbindungen ein solcher Abschlusswiderstand vorhanden sein sollte.

Aus Figur 2 ist links eine Steckverbindung S eines Teilnehmers TNA oder TNE gezeigt, bei der die Anschaltung von Abschlusswiderständen RA1, RA2 und RA3 in einer an sich bekannten Weise über einen zweipoligen Schalter SW vorgenommen wird. Dabei wird der Abschlusswiderstand RA1 von der Busleitung A an die Versorgungsspannung, der Abschlusswiderstand RA2 zwischen die Busleitung A und B und der Abschlusswiderstand RA3 von der Busleitung B an Masse geschaltet. In der rechten Hälfte der Figur 2 ist prinzipiell gezeigt, wie die schaltbaren Abschlusswiderstände RA1, RA2 und RA3 durch einen mit Transistoren, z. B. Feldeffekttransistoren FET, realisierten ohmschen Schalter OS ersetzt werden.

Die schaltungstechnische Umsetzung besteht nach Figur 3 aus der Digitalisierung D eines über einen Codewiderstand RC in der Steckverbindung erfassten Ansteuersignals für eine Ansteuerungslogik AS und aus drei ohmschen Schaltern OS1, OS2 und OS3. Die drei ohmschen Schalter OS1, OS2 und OS3 arbeiten zwar nach dem gleichen Prinzip mit einem Feldeffekttransistor T8, T9 für OS1 und OS3 und T10, T11 für OS2 im linearen Bereich ihrer Kennlinie, da die Bezugsspannungen jedoch verschieden sind, ist auch die Beschaltung unterschiedlich und somit sind die drei Blöcke, wie nachfolgend erläutert, nicht identisch.

Die zuvor beschriebenen Profibus-Anschlüsse sind mit einem Widerstand Rc, z. B. 100 kΩ, so codiert, dass die SteckPosition des Teilnehmers TNA, TNE oder TN2, TN3 aus dem resultierenden Widerstandswert erkennbar ist. Um ein gestecktes Kabel, z. B. mit einem D-Sub- oder Trapez-Stecker, oder ein mit Schraubklemmen aufgelegtes Kabel zu erkennen, kann ein spezieller konstruktiver Mechanismus den Widerstand Rc zwischen Code-Eingang an der Digitalisierung D und Masse legen.

Bei einem gesteckten Kabel befindet sich der Codewiderstand Rc beispielsweise zwischen einem freien Pin des 9-poligen Steckers und der Masse. Beim Stecken des Kabels des Teilnehmers TNA, TNE, TN2, TN3 geht dieser freie Pin auf den Code-eingang der Digitalisierung D; bei nicht gestecktem Kabel fehlt der Widerstand Rc, der im Steckergehäuse des jeweiligen Teilnehmers untergebracht ist.

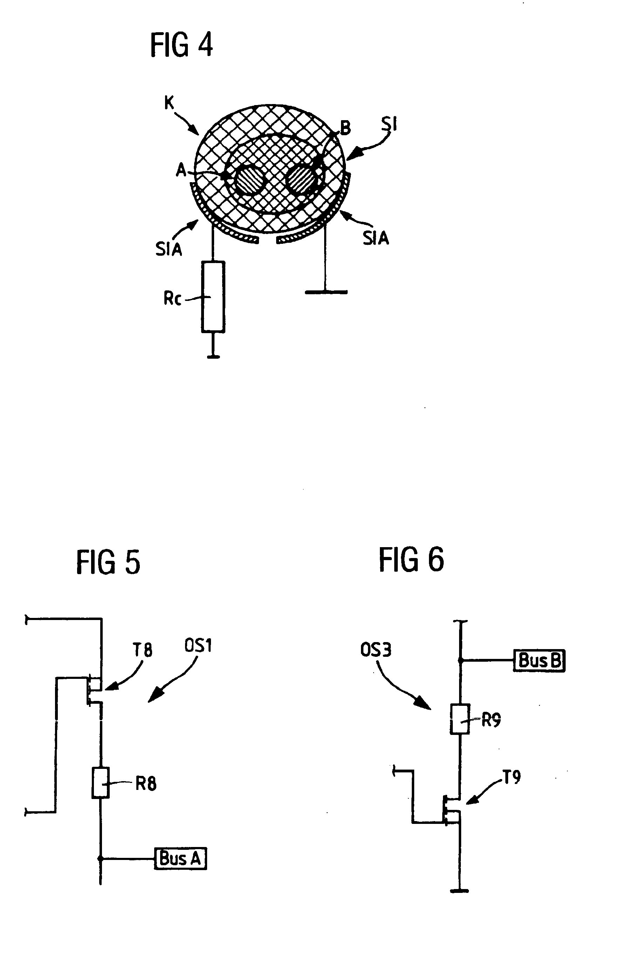

Wenn ein Kabel K des Teilnehmers TNA, TNE, TN2, TN3 über einen Schraubanschluss an die Busleitungen A und B angeschlossen wird, so kann bei dem Ausführungsbeispiel nach Figur 4 der aufgelegte Schirm SI das eine Ende des Codewiderstands Rc mit Masse verbinden. Dies ist hier dadurch ermöglicht, dass die Schirmauflage SIA längs in zwei Teile gespalten wird. Bei nicht eingelegtem Kabel fehlt die Verbindung der beiden Schirmauflagen SIA, so dass der Codewiderstand nicht mit Masse verbunden ist.

Am Anfang bzw. Ende des Profibus PB führt nur eine Leitung zum Teilnehmer TNA oder TNE, mittendrin bei den Teilnehmern TN2, TN3 sind es aber zwei Leitungen, so dass sich bei zwei Leitungen der Widerstandswert der prallelgeschalteten Codewiderstände Rc zum Beispiel von 100 kΩ auf 50 kΩ halbiert. Die Digitalisierung D, bei der hier nicht näher beschriebene bipolare Transistoren jeweils mit zwei Arbeitspunkten als elektronischer Schalter arbeiten, erzeugt aus diesen Widerstandswerten digitale Steuersignale für die Ansteuerungslogik AS bzw. die ohmschen Schalter OS1, OS2 und OS3.

Ein Steuersignal Switch_N als ein Ausgangssignal der Digitalisierung D wird gemäß der Figur 3 zum Beispiel bei unterschiedlichen Werten des Codewiderstandes Rc nach folgender Tabelle erzeugt:

| Position TN.. | Widerstand Rc | | Switch N |
|---|---|---|---|
| Nicht gesteckt | unendlich | Pin ist offen | low |
| Anfang oder Ende | 100 kΩ | ein Stecker/Kabel | low |
| mittendrin | 50 kΩ | zwei Stecker/Kabel | high |

Das Steuersignal Switch_N für den ohmschen Schalter OS1, ein invertiertes Steuersignal Switch_P für den ohmschen Schalter OS3 und Steuersignale Switch_AB1 und Switch_AB2 für den ohmschen Schalter OS2 werden gemäß der Figur 3 mit der Digitalisierung D und auch der Ansteuerungslogik AS mit herkömmlichen Mitteln der Transistorschaltungstechnik erzeugt.

Die Profibus-Abschlusswiderstände, die hier mit den ohmschen Schaltern OS1, OS2 und OS3 realisiert sind, schließen das Leitungsende ab, wobei der gesamte Ersatzwiderstand der drei Werte der ohmschen Schalter OS1, OS2 und OS3 etwa 100Ω beträgt, was dem Wellenwiderstand der zweiadrigen Profibus-Leitung PB (Leitung A und Leitung B) entspricht. Auch bei den herkömmlichen Anordnungen (vgl. Figur 2) sind die Busleitungen A und B jeweils über einen Widerstand mit einem Wert von z. B. 390Ω gegen die Versorgungsleitungen (+5V) und gegen Masse anschaltbar. Ein weiterer Widerstand von z. B. 220Ω liegt zwischen den beiden Profibusleitungen A und B.

Als Ersatz für den eingangs erwähnten manuellen Schaltvorgang schaltet nunmehr ein Transistor als Unterbrechung oder Verbindung. Im einfachsten Fall könnten dies bipolare Transistoren sein, die als Schalttransistoren (Ein-Aus) arbeiten. Da die Profibus-Leitungen A und B aber auch Spannungen von + 12V bis -7V im sog. Common-Mode-Bereich führen können, muss der Transistor, der den Abschlusswiderstand zu- oder abschaltet, einen Strom in beiden Richtungen durchlassen. Dies kann ein konventioneller bipolarer Transistor nicht, da dieser nur einen Strom in einer Richtung durchlässt.

Dagegen kann ein Feldeffekttransistor (FET) den Strom in beiden Richtungen durchlassen, wobei bei diskreten FET's zu beachten ist, dass diese eine Rückwärtsdiode haben, so dass sich dieser FET bei negativer Drain-Source-Spannung U_{DS} nicht sperren ließe. Diese Funktionalität braucht aber der ohmsche Schalter OS1, OS2, OS3 im Aus-Zustand bei Überspannungen im Common-Mode-Bereich. Daher dürfen nur symmetrisch aufgebaute FET's als ohmsche Schalter OS1, OS2, OS3 eingesetzt werden, die keine Rückwärtsdiode haben. Dies ist z. B. der Fall bei integrierten FET's in sog. ASICs, die generell keine Rückwärtsdiode haben und symmetrisch aufgebaut sind.

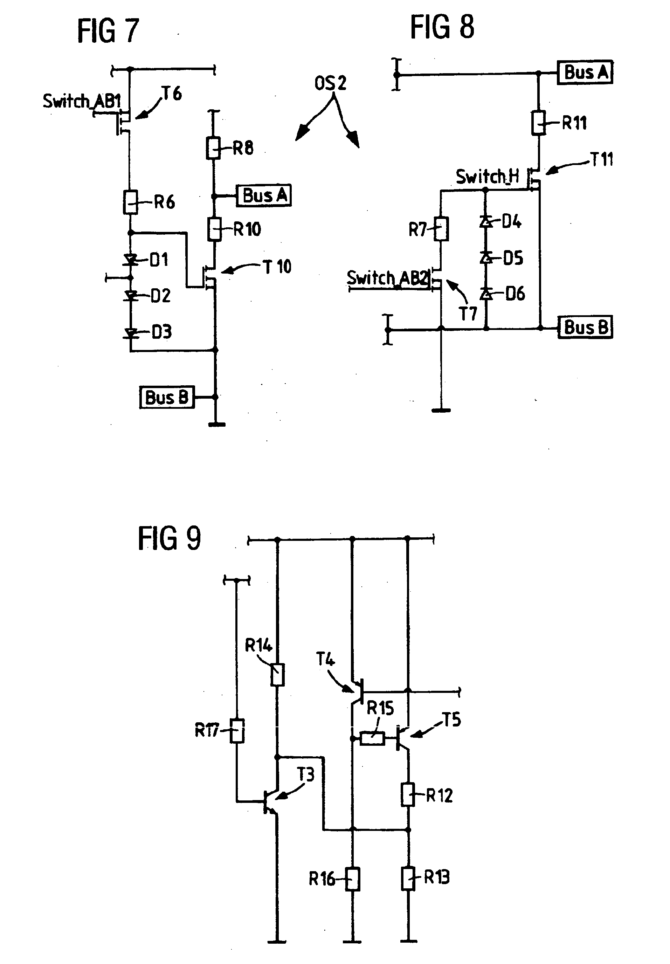

Die erfindungsgemäßen Abschlusswiderstände, bzw. ohmschen Schalter OS1, OS2, OS3, sind somit über geeignete Feldeffekttransistoren T8, T9, T10, T11 realisiert, die im ohmschen Bereich arbeiten und anhand von Figuren 5 und 6 für T8 (OS1) und T9 (OS3) und anhand von Figuren 7 und 8 für T10 und T11 (OS2) erläutert werden.

Generell hängt der resultierende Widerstandswert der Source-Drain-Strecke eines FET's von der Steilheit der Drainstrom I_{D} - Drain-Source-Spannung U_{DS} Kennlinie ab und ändert sich in Abhängigkeit der Gate-Source-Spannung U_{GS} . Dabei muss die Gate-Spannung U_{GS} möglichst konstant sein, um einen stabilen Widerstandswert zu erreichen. Die erreichbaren Widerstände mit einem FET liegen in einem Bereich von 20Ω bis 100Ω, so dass auf jeden Fall noch ein zusätzlicher Serienwiderstand R8 beim FET T8 nach der Figur 5 und R9 beim FET T9 nach der Figur 6 gebraucht wird, um die erforderlichen Widerstandswerte beim Profibussystem in der Größenordnung von 220Ω bis 390Ω zu erreichen. Der Vorteil eines kleinen FET-Widerstandes ist, dass eine Schwankung des FET-Widerstandes den Gesamtwiderstand des ohmschen Schalters von Busleitung B gegen Masse (Figur 6) und von der Busleitung A gegen die 5V Versorgungsspannung weniger verändert. Solche Schwankungen sind durch die leichten Nichtlinearitäten, z. B. ein leicht bauchiger Kurvenverlauf der I_{D}-U_{DS} Kennlinie im ohmschen Bereich, oder durch Schwankungen der Steuerspannung U_{GS} bedingt. Insbesondere die Einstellung der Steuerspannungen U_{GS} ist dabei relativ aufwendig, da das beschriebene Ausführungsbeispiel vorzugsweise mit einer geringen Versorgungsspannung von 5V arbeitet.

Bei den ohmschen Schaltern OS1 mit dem FET T8 nach der Figur 5 und OS3 mit dem FET T9 nach der Figur 6 lässt sich als Bezugspotenzial für die Steuerspannung U_{GS} die Versorgungsspannung nehmen, hier 5V bzw. die Masse. Daher ist bei diesen beiden FET's T8 und T9 der Source-Anschluss mit der Versorgung verbunden. Der ohmsche Schalter OS1 von der Busleitung A gegen die Versorgungsspannung 5V muss ein p-Kanal-FET T8 sein, da die Gate-Source-Spannung U_{GS} negativ ist, nämlich bei zugeschaltetem Abschlusswiderstand -5V. Der ohmsche Schalter OS3 von der Busleitung B gegen Masse ist ein n-Kanal-FET T9, der bei zugeschalteten Profibus-Abschlusswiderständen über das anhand der Figur 3 beschriebene Signal Switch_P eine Gate-Source-Spannung U_{GS} von ca. 5V bekommt. Beide FET's T8 und T9 bekommen ihr Steuersignal direkt von der Digitalisierung D. Das ist deshalb möglich, weil der Source-Anschluss des jeweiligen FET T8 oder T9 auf konstantem Pegel mit 0V bzw. mit 5V verbunden ist.

Im Unterschied zu der zuvor erwähnten Ansteuerung der FET's T8 und T9 ist die Konstanz der Steuerspannung U_{GS} bei den FET's T10 und T11 des mittleren ohmschen Schalters OS2 nach den Figuren 7 und 8 schwieriger einzuhalten und nicht so einfach anzusteuern, da ein festes Bezugspotenzial wie +5V oder 0V fehlt und dadurch sich hier beide Pegel an Drain und Source des jeweiligen FET's ändern. Beide Busleitungen A und B können Spannungswerte im Bereich -7V bis +12V annehmen. Als Ansteuersignal erhält die Schaltung nach der Figur 7 das anhand der Figur 3 beschriebene Signal Switch_AB1 über den FET T6 und die Schaltung nach der Figur 8 das anhand der Figur 3 beschrieben Signal Switch_AB2 über den FET T7.

Um eine Steuerspannung U_{GS} größer als 2V zu erreichen und diese auch möglichst konstant zu halten, sind zwischen Gate und Source von FET T10 nach der Figur 7 drei Siliziumdioden D1, D2, D3 in Serie geschaltet, die in Flussrichtung eine Spannung von 2,2V einstellen. Den Strom durch die Dioden begrenzt ein Widerstand R6 und ein FET T6 in Serie. Diese sind so dimensioniert, dass bei einer Spannung an der Busleitung B bei 2,5V oder niedriger der ohmsche Schalter OS2 öffnet, also der Profibus-Abschlusswiderstand zugeschaltet ist. Bei Spannungen deutlich kleiner als 2,5V, also z. B. von -7V, begrenzt der FET T6 den Strom durch die Dioden D1, D2, D3, da er im Sättigungsbereich arbeitet. Die Gate-Source-Spannung U_{GS} des FET T6 ist dabei beispielsweise durch einen hier nicht dargestellten Spannungsteiler so niedrig wie möglich eingestellt, damit der FET T6 sehr schnell in die Sättigung kommt.

Für den Fall, dass Spannungen an der Busleitung B größer als 2,5V auftreten, werden Siliziumdioden D4, D5, D6 nach der Figur 8 leitend, so dass hier der FET T11 als ohmscher Schalter OS2 wirkt. Die Wirkungsweise des in der Figur 8 abgebildeten Schaltungsteils ist genau identisch mit dem in der Figur 7 abgebildeten Schaltungsteil. Lediglich die Bezugswerte der Spannungen sind in dem Fall anders, bei dem die Spannung an der Busleitung B kleiner oder größer als 2,5V ist.

Dabei kann der Strom jeweils in beiden Richtungen von der Busleitung B nach der Busleitung A und umgekehrt fließen, wobei nur zu beachten ist, dass es möglich ist, dass beide Profibusleitungen A und B gleichzeitig größer oder kleiner als 2,5V sind.

Da es nicht ausgeschlossen ist, dass die Busleitung B genau eine Spannung von 2,5V hat, könnten so beide FET's T10 und T11 des ohmschen Schalters OS2 öffnen. Dann wäre der Profibus-Abschlusswiderstand zwischen der Busleitung A und der Busleitung B wegen der Parallelschaltung der mit der jeweiligen Source-Drain-Strecke in Reihe liegenden Widerstände R10 und R11 nur noch halb so groß. Um dies zu vermeiden, bekommt die Ansteuerlogik von T11 ein mit einer Schaltung gemäß Figur 9 erzeugtes Signal, das signalisiert ob der FET T10 geöffnet hat. Nur wenn T10 geschlossen ist, darf der FET T11 öffnen, vorausgesetzt, dass die Profibus-Abschlusswiderstände zugeschaltet sein sollen.

Falls die Profibus-Abschlusswiderstände abgeschaltet sein sollen, zieht ein Transistor T3 den Pegel des anhand der Figur 3 erläuterten Signals Switch_AB2 auf Masse und sperrt damit den FET T11. Der Kollektorwiderstand des Transistors T3 hat dabei einen relativ hohen Wert, da bei einem sperrendem nachgeschalteten Transistor T5 das Widerstandsverhältnis von Widerstanden R13 zu R14 die Steuerspannung des FET's T7 nach der Figur 8 bestimmt. Bei einem stromführenden Transistor T5 bestimmt dagegen das Verhältnis der Widerstandswerte von R13 zu R12 parallel R14 die Strombegrenzung von des FET's T7 nach der Figur 8.

## Patentansprüche

1. Schaltungsanordnung zum Abschluss von Busleitungen (A, B) eines Bussystems (PB) mit an die Busleitungen (A, B) zu- und abschaltbaren Abschlusswiderständen (RA; RA1, RA2, RA3) für die jeweils erste und letzte Teilnehmerstation (TNA, TNE) am Bussystem (PB), wobei eine codierbare Ansteuerschaltung in den jeweiligen Busanschlüssen (S) des Bussystems (PB) vorhanden ist, mit der Transistoren (T) als ohmsche Schalter (OS; OS1, OS2, OS3) zur Bildung der Abschlusswiderstände (RA1,RA2, RA3) zwischen und an die Busleitungen (A, B) schaltbar sind,
**dadurch gekennzeichnet, dass** einer Ansteuerungslogik eine Digitalisierungsschaltung (D) vorgeschaltet ist, welche durch einen Widerstandswert eines bei Anschaltung eines Teilnehmers an die Busleitungen (A, B) auswertbaren Codierwiderstands (Rc) derart codierbar ist, dass im Verlauf des Bussystems
(PB) bei einer Anschaltung von zum Teilnehmer (TN2, TN3) hin-und vom Teilnehmer wegführenden Busanschlüssen (S) durch eine Parallelschaltung von Codewiderständen (Rc) der Widerstandswert vermindert wird und am Anfang und am Ende der Busleitung (A, B) durch Anschaltung des Teilnehmers (TNA, TNE) über nur einen Busanschluss (S) der volle Widerstandswert des Codierwiderstandes (Rc) anliegt.

2. Schaltungsanordnung nach Anspruch 1,
**dadurch gekennzeichnet, dass** zum Anschluss des Codierwiderstandes (Rc) an die Digitalisierungsschaltung (D) bei einem mit Steckkontakten versehenen Busanschluss (S) der Codierwiderstand (Rc) von einem freien Pin des Steckers nach Masse geführt ist.

3. Schaltungsanordnung nach Anspruch 1,
**dadurch gekennzeichnet, dass** zum Anschluss des Codierwiderstandes (Rc) an die Digitalisierungsschaltung (D) bei einem über einen Kabelanschluss herstellbaren Busanschluss über den Schirm (SI) des Kabels (K) eine geteilte Kabelauflage (SIA) im Busanschluss derart überbrückt wird, dass der Codierwiderstand (Rc) nach Masse geführt ist.

4. Schaltungsanordnung nach einem der vorhergehenden Ansprüche,
**dadurch gekennzeichnet, dass** die als ohmsche Schalter (OS; OS1, OS2, OS3) wirkenden Transistoren Feldeffekttransistoren (FET) sind.

5. Schaltungsanordnung nach einem der vorhergehenden Ansprüche,
**dadurch gekennzeichnet, dass** ein erster ohmscher Schalter (OS1) zwischen der einen Busleitung (A) und der Versorgungsspannung, ein zweiter ohmscher Schalter (OS2) zwischen zwei Busleitungen (A, B) und ein dritter ohmscher Schalter (OS3) zwischen der anderen Busleitung (B) und Masse schaltbar ist.

6. Schaltungsanordnung nach Anspruch 5,
**dadurch gekennzeichnet, dass** die ohmschen Schalter (OS1, OS2, OS3) durch die jeweiligen Source-Drain-Strecken der Feldeffekttransistoren (FET) und jeweils einen in Reihe geschalteten Zusatzwiderstand (R8, R9) gebildet sind.

7. Schaltungsanordnung nach Anspruch 5 oder 6,
**dadurch gekennzeichnet, dass** zur Ansteuerung des zweiten ohmschen Schalters (OS2) zwischen den Busleitungen (A, B) eine Ansteuerlogik aus mehreren Feldeffekttransistoren (FET; T10, T11, T7, T6) und spannungsstabilisierenden Dioden (D1, D2, D3, D4, D5, D6) gebildet ist, mit der eine Ansteuerung dieses ohmschen Schalters (OS2) bei unterschiedlichen Spannungsverhältnissen auf den Busleitungen durchführbar ist.

8. Schaltungsanordnung nach einem der vorhergehenden Ansprüche,
**dadurch gekennzeichnet, dass** das Bussystem ein Profibus (PB) zur Anwendung in der Automatisierungstechnik ist.

## Claims

1. Circuit arrangement for terminating bus lines (A, B) of a bus system (PB) with terminating resistances (RA; RA1, RA2, RA3) which can be activated and deactivated at the bus lines (A, B) in each case for the first and last subscriber stations (TNA, TNE) on the bus system (PB), whereby a codeable drive circuit is present in the respective bus connections (S) of the bus system (PB), with which transistors (T) can be switched as ohmic switches (OS; OS1, OS2, OS3) in order to form the terminating resistances (RA1, RA2, RA3) between and to the bus lines (A, B),
**characterised in that** a digitisation circuit (D) is connected upstream of a drive logic circuit which can be coded in such a manner by means of a resistance value of a coding resistance (Rc) that can be evaluated on connection of a subscriber to the bus lines (A, B) that, in the course of the bus system (PB) when connecting bus connections (S) leading to the subscriber (TN2, TN3) and away from the subscriber, the resistance value is reduced through a parallel connection of coding resistances (Rc) and the full resistance value of the coding resistance (Rc) is applied at the start and at the end of the bus line (A, B) through connecting the subscriber (TNA, TNE) by way of only one bus connection (S).

2. Circuit arrangement according to claim 1,
**characterised in that**, in order to connect the coding resistance (Rc) to the digitisation circuit (D), in the case of a bus connection (S) provided with plug contacts the coding resistance (Rc) is earthed from a free pin of the connector.

3. Circuit arrangement according to claim 1,
**characterised in that**, in order to connect the coding resistance (Rc) to the digitisation circuit (D), in the case of a bus connection which can be established using a cable connection by way of the screen (SI) of the cable (K) a divided cable run (SIA) in the bus connection is bridged in such a manner that the coding resistance (Rc) is earthed.

4. Circuit arrangement according to one of the preceding claims,
**characterised in that** the transistors acting as ohmic switches (OS; OS1, OS2, OS3) are field-effect transistors (FET).

5. Circuit arrangement according to one of the preceding claims,
**characterised in that** a first ohmic switch (OS1) can be switched between the one bus line (A) and the supply voltage, a second ohmic switch (OS2) can be switched between two bus lines (A, B) and a third ohmic switch (OS3) can be switched between the other bus line (B) and earth.

6. Circuit arrangement according to claim 5,
**characterised in that** the ohmic switches (OS1, OS2, OS3) are formed by the respective source-drain paths of the field-effect transistors (FET) and by an additional resistance (R8, R9) connected in series in each case.

7. Circuit arrangement according to claim 5 or 6,
**characterised in that**, in order to drive the second ohmic switch (OS2) between the bus lines (A, B), a drive logic circuit is formed from a plurality of field-effect transistors (FET; T10, T11, T7, T6) and voltage stabilizing diodes (D1, D2, D3, D4, D5, D6), with which it is possible to perform driving of this ohmic switch (OS2) under different voltage conditions on the bus lines.

8. Circuit arrangement according to one of the preceding claims,
**characterised in that** the bus system is a Profibus (PB) for use in automation engineering.

## Revendications

1. Circuit pour la terminaison de lignes de bus (A, B) d'un système de bus (PB) avec des résistances de terminaison (RA ; RA1, RA2, RA3) qui peuvent être branchées et débranchées sur les lignes de bus (A, B) et qui sont destinées au premier et au dernier poste d'abonné (TNA, TNE) respectifs sur le système de bus (PB), un circuit de commande qui peut être codé étant alors présent dans les connexions de bus respectives (S) du système de bus (PB), circuit de commande avec lequel des transistors (T) peuvent être commutés comme interrupteurs ohmiques (OS ; OS1, OS2, OS3) pour la formation des résistances de terminaison (RA1, RA2, RA3) entre et sur les lignes de bus (A, B),
**caractérisé par le fait qu'**il est branché du côté amont d'une logique de commande un circuit de numérisation (D) qui peut être codé de telle sorte par une valeur résistive d'une résistance de codage (Rc) évaluable lors du raccordement d'un abonné aux lignes de bus (A, B) que, tout au long du système de bus (PB), lors d'un raccordement de connexions de bus (S) arrivant à l'abonné (TN2, TN3) ou partant de l'abonné, la valeur résistive est réduite par un montage en parallèle de résistances de codage (Rc) et que, au début et à la fin de la ligne de bus (A, B), la valeur résistive entière de la résistance de codage (Rc) est présente grâce au raccordement de l'abonné (TNA, TNE) par l'intermédiaire d'une seule connexion de bus (S).

2. Circuit selon la revendication 1,
**caractérisé par le fait que**, pour la connexion de la résistance de codage (Rc) au circuit de numérisation (D) dans le cas d'une connexion de bus (S) munie de contacts à fiches, la résistance de codage (Rc) est conduite d'une broche libre de la fiche à la masse.

3. Circuit selon la revendication 1,
**caractérisé par le fait que**, pour la connexion de la résistance de codage (Rc) au circuit de numérisation (D) dans le cas d'une connexion de bus pouvant être fabriquée par l'intermédiaire d'une connexion câblée, un support de câble divisé (SIA) est ponté de telle sorte dans la connexion de bus par l'intermédiaire du blindage (SI) du câble (K) que la résistance de codage (Rc) est conduite à la masse.

4. Circuit selon l'une des revendications précédentes,
**caractérisé par le fait que** les transistors faisant office d'interrupteurs ohmiques (OS ; OS1, OS2, OS3) sont des transistors à effet de champ (FET).

5. Circuit selon l'une des revendications précédentes,
**caractérisé par le fait qu'**un premier interrupteur ohmique (OS1) est commutable entre une première ligne de bus (A) et la tension d'alimentation, qu'un deuxième interrupteur ohmique (OS2) est commutable entre les deux lignes de bus (A, B) et qu'un troisième interrupteur ohmique (OS3) est commutable entre l'autre ligne de bus (B) et la masse.

6. Circuit selon la revendication 5,
**caractérisé par le fait que** les interrupteurs ohmiques (OS1, OS2, OS3) sont formés par les sections source-drain respectives des transistors à effet de champ (FET) et à chaque fois une résistance supplémentaire (R8, R9) branchée en série.

7. Circuit selon la revendication 5 ou 6,
**caractérisé par le fait que**, pour la commande du deuxième interrupteur ohmique (OS2) entre les lignes de bus (A, B), une logique de commande est formée à partir de plusieurs transistors à effet de champ (FET ; T10, T11, T7, T6) et de plusieurs diodes stabilisatrices de tension (D1, D2, D3, D4, D5, D6), logique de commande avec laquelle une commande de cet interrupteur ohmique (OS2) peut être effectuée pour des rapports de tension différents sur les lignes de bus.

8. Circuit selon l'une des revendications précédentes,
**caractérisé par le fait que** le système de bus est un Profibus (PB) en vue d'une application en technique d'automatisation.
